# EUROPÄISCHE PATENTANMELDUNG

(11) **EP 1 045 059 A1**
(43) Veröffentlichungstag der Anmeldung: **18.10.2000**
(21) Anmeldenummer: 00104619.2
(22) Anmeldetag: 03.03.2000
(51) Int. Cl.: D04H 1/46, D04H 1/56, D04H 1/48, D04H 1/54, D04H 1/42, D04H 13/00, A47K 10/02, A47L 13/16, B32B 5/26

(54) **Reinigungstuch**

(30) Priorität: 16.04.1999 DE 19917275
(71) Anmelder: Firma Carl Freudenberg, 69469 Weinheim (DE)
(72) Erfinder: Wirsching, Jochen, 69488 Birkenau (DE); Philipp, Dieter, 69198 Schriesheim (DE); Kremser, Steffen, 68542 Heddesheim (DE)

(57) **Zusammenfassung**

Reinigungstuch in Vliesstruktur zur Naß-, Feucht- und/oder Trockenreinigung, wobei das Reinigungstuch aus Mikrostapelfasern aus mindestens zwei verschiedenen Polymeren und aus saugfähigen, in Spinnverfahren hergestellten Sekundärstapelfasern besteht.

## Beschreibung

### Technisches Gebiet

Die Erfindung befaßt sich mit einem Reinigungstuch in Vliesstruktur zur Naß-, Feucht- und/oder Trockenreinigung.

Reinigungstücher sind allgemein bekannt und dafür vorgesehen, Schmutz von der Oberfläche eines Gegenstandes abzulösen und selbst aufzunehmen. Um beide Aufgaben zu lösen, muß ein Reinigungstuch eine sehr gute Reinigungsleistung sowie eine ausreichende Abriebfestigkeit haben und über ein ausreichendes Porenvolumen verfügen, um den Schmutz zu speichern.

### Stand der Technik

In der DE OS 30 35 038 wird ein Reinigungstuch behandelt, welches gute Gebrauchseigenschaften aufweist. Es besteht aus porösen Mikrofasern aus einem polymerem Werkstoff, die einen im wesentlichen porenfreien Faserkern und einen offenporig geschäumten Fasermantel aufweisen. Ein solches Reinigungstuch aus polymerem Werkstoff hat eine besonders hohe mechanische Widerstandsfähigkeit, was sich positiv in bezug auf die Beständigkeit gegen Abrieb auswirkt. Durch eine Vermischung von Mikrofasern mit Stapelfasern oder Endlosfasern wird eine verbesserte Sprungelastizität und eine vergrößerte Fülligkeit mit verbessertem Schmutzaufnahmevermögen erreicht.

Eine andere Ausgestaltung eines Reinigungstuchs ist in der US PS 4 145 464 behandelt. Dort wird das Reinigungstuch aus einem Gemisch aus Zellulose- und Synthesefasern hergestellt, das beiderseits durch zellulosische Schichten abgedeckt ist und durch eine gegenseitige Verklebung sämtlicher Fasern in örtlich getrennten Bereichen verfestigt ist. Ein solches Reinigungstuch hat jedoch keine ausreichende mechanische Festigkeit, da die Zellulosefasern eine relativ geringe Länge von unter 6,35 mm haben, wodurch in der Folge eine unbefriedigende Abriebbeständigkeit entsteht. Schon nach relativ kurzem Gebrauch kann es zur Ablösung von Faserbestandteilen kommen, die sich in Gestalt von staubförmigen Partikeln oder Fusseln auf der zu reinigenden Fläche niederschlagen.

Durch die EP 0 423 619 ist desweiteren ein Reinigungstuch bekannt, welches aus mehreren Schichten gebildet ist und zwar aus einer Schicht aus synthetischen Endlosfasern, sogenannten Filamentfasern, die mindestens auf einer ihrer Seiten eine Schicht aus Stapelfasern vermischt mit natürlichen Fasern hat. Die Menge an natürlichen Fasern wird mit 15 bis 70 % angegeben. Bei diesem Reinigungstuch wird eine hohe Festigkeit erreicht, insbesondere durch die Unter- oder Mittelschicht aus synthetischen Endlosfasern. Jedoch führen die kurzen natürlichen Fasern in der beziehungsweise den Deckschichten zu einer unbefriedigenden Abriebfestigkeit ähnlich, wie bei der voranstehenden US PS 4 145 464.

### Darstellung der Erfindung

Der Erfindung liegt die Aufgabe zugrunde, ein Reinigungstuch für Naß- Feucht- und/oder Trockenreinigung zu schaffen, das eine hohe Abriebfestigkeit hat sowie ein großes Aufnahmevolumen für den abgeriebenen Schmutz aufweist. Es soll außerdem möglichst fest sein, eine gute Reinigungsleistung bringen und darüber hinaus angenehm im Griff sein.

Die Lösung der gestellten Aufgabe wird bei einem Reinigungstuch der eingangs genannten Art erfindungsgemäß dadurch erreicht, daß das Reinigungstuch aus Mikrostapelfasern aus mindestens zwei verschiedenen Polymeren und aus saugfähigen im Spinnverfahren hergestellten Sekundärstapelfasern besteht. Bei einem solchen Reinigungstuch wird die hohe Reinigungsleistung und Festigkeit der Mikrostapelfaser und ihre Abriebfestigkeit mit der hohen Saugfähigkeit der Sekundärstapelfasern kombiniert. Die Sekundärstapelfasern werden in die Mikrostapelfasern eingebunden und darin sicher gehalten.

Bei den Mikrostapelfasern handelt es sich um Mehrkomponenten-Splittfasern, insbesondere um Bikomponenten-Splittfasern. Sie werden überwiegend aus Polymeren auf der Basis von Polyester und Polyamid gebildet. Hier besteht ein weites Feld möglicher Varianten. Die Auswahl der Splittfasern oder Spaltfasern erfolgt hier vorzugsweise unter ökonomischen und verfahrenstechnischen Gesichtspunkten.

Der Titer der Mehrkomponentenfasern liegt vor ihrer Splittung bei 1,7 bis 3,0 dtex. Der Titer der Splittfasern liegt unter 1 dtex, vorzugsweise unter 0,2 dtex.

Als Sekundärstapelfasern werden aus Naturfasern, insbesondere aus Zellulosefasern aus Baumwolle, aus Viskose, Lyocell und/oder anderen saugfähigen Stapelfasern, wie Polyvinylalkoholfasern, hergestellte Stapelfasern verwendet. Der Titer der Sekundärstapelfasern liegt bei 1,0 bis 3,0 dtex. Diese ersponnenen Stapelfasern sind bedeutend fester, als übliche Naturfasern.

Um ein möglichst großes Porenvolumen zu erreichen, ist es günstig, wenn das Reinigungstuch aus mindestens zwei übereinanderliegenden Vliesschichten gebildet wird. Dabei ist es besonders günstig, wenn eine der Vliesschichten aus Mikrostapelfasern und saugfähigen Sekundärstapelfasern besteht und die andere Vliesschicht aus polymeren Tertierstapelfasern, insbesondere aus einem Thermoplast und saugfähigen Sekundärstapelfasern gebildet ist. Diese unter Einsatz von Tertierstapelfasern hergestellte Vliesschicht ist besonders voluminös. Hier wird somit die hohe Reinigungsleistung und Abriebfestigkeit der Mikrostapelfasern auf der einen Seite des Reinigungstuches in Verbindung mit dem besonderen Volumen der Tertierstapelfasern und der Sekundärstapelfasern auf der anderen Seite des Tuches ausgenutzt. Das Saugvermögen wird durch die Sekundärstapelfasern erhöht. Die besonders bevorzugte Ausführungsform sieht vor, eine Vliesschicht aus polymeren Tertierstapelfasern und saugfähigen Sekundärstapelfasern als Mittelschicht zu nehmen, die auf ihren Seiten jeweils von einer Deckvliesschicht aus Mikrostapelfasern und saugfähigen Sekundärstapelfasern eingefaßt ist. Bei diesem Reinigungstuch haben die beiden äußeren Schichten, die mit dem zu reinigenden Gegenstand in Berührung kommen, eine hohe Abriebfestigkeit, während die Mittelschicht ein besonders starkes Volumen mit einer hohen Saugfähigkeit hat. Als Tertierstapelfasern kommen vorzugsweise Stapelfasern aus einem Polyamid zum Einsatz, mit einem für solche Fasern üblichen Titer, der über dem Titer der Mikrofasern liegt.

Die bevorzugte Herstellungsart eines Tuches aus mehreren Vliesschichten sieht vor, zunächst einzelne Vliesschichten zu bilden und dieselben miteinander zu verbinden. Dabei kann jede Vliesschicht mit den Sekundärstapelfasern bereits versehen sein. Es ist aber auch möglich, zunächst nur die Tertierstapelfaserschicht mit den Sekundärstapelfasern auszustatten und die Mikrofaserschicht ohne Sekundärfasern daran heranzuführen und durch eine Vernadelung der Schichten miteinander die Sekundärstapelfasern auch in die Mikrostapelfaserschicht, beziehungsweise -schichten, einzubringen.

Die einzelnen Vliesschichten werden miteinander verbunden, was durch Vernadeln, Verwirbeln oder Laminieren geschehen kann. Verfahren dieser Art sind an sich bekannt. Besonders gute Ergebnisse werden erreicht, wenn die Vliesschichten durch Punktverschweißen miteinander verbunden sind. Hierdurch ergibt sich eine durchbrochene Oberfläche, welche die Reinigungskraft des Tuches erhöht. Bei dem Punktverschweißen können die einzelnen Vliesschichten durch Verschmelzungszonen unter Anwendung von Wärme und Druck verfestigt sein. Es ist aber auch möglich, die Oberflächen des Reinigungstuches durch Verschmelzungszonen, insbesondere durch Kalandrieren, zu verfestigen.

Das Flächengewicht des Reinigungstuches beträgt in der Regel 75 bis 250 g/qm vorzugsweise 120 bis 180 g/qm. Bei einem dreilagigen Reinigungstuch aus einer Mittelschicht aus Tertierstapelfasern und Sekundärstapelfasern und zwei Deckschichten aus Mikrostapelfasern und Sekundärstapelfasern wird das Flächengewicht der Mittelschicht so gewählt, daß es 40 bis 80 % des Gesamtflächengewichts beträgt. Dabei ist es günstig, wenn die Flächengewichte der Deckschichten gleich sind.

Der Anteil an Mikrostapelfasern in der beziehungsweise den Deckschichten überwiegt den Anteil an Sekundärstapelfasern. Der Anteil an Mikrostapelfasern liegt zwischen 70 und 98 %, bevorzugt zwischen 70 und 80 %.

In der Mittelschicht überwiegt der Anteil an Sekundärstapelfasern den Anteil an Tertierstapelfasern. Er beträgt zwischen 70 und 100 %, vorzugsweise 70 und 80 %.

### Ausführung der Erfindung

Anhand von zwei in der Zeichnung dargestellten Ausführungsbeispielen wird die Erfindung näher erläutert.

Es zeigt:
- Figur 1: stark vergrößert einen Ausschnitt aus einem Reinigungstuch mit drei Vliesschichten im Schnitt und
- Figur 2: einen Ausschnitt aus einem Reinigungstuch aus drei miteinander durch Punktverschweißen verbundenen Vliesschichten im Schnitt.

### Ausführung der Erfindung

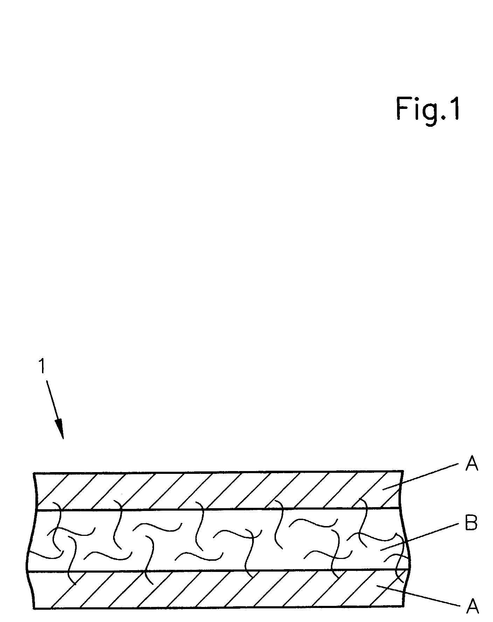

In der Figur 1 ist vergrößert ein Schnitt durch ein Ausschnitt eines Reinigungstuches 1 gezeigt, welches aus drei Vliesstoffschichten A, B, A gebildet ist. Die Mittelschicht B besteht aus synthetischen Tertierstapelfasern vermischt mit Sekundärstapelfasern, während die beiden Deckschichten A, A aus Mikrostapelfasern und Sekundärstapelfasern gebildet sind. Die beiden Deckschichten A, A sind in ihrer Zusammensetzung gleich. Die Vliesstoffschichten A, B, A sind wasserstrahlvernadelt. Die einzelnen Fasern werden dadurch miteinander verknäult und die Mikrostapelfasern zumindest teilweise gesplittet. Es entsteht ein fester Verbund der verschiedenen Fasern und Vliesschichten miteinander.

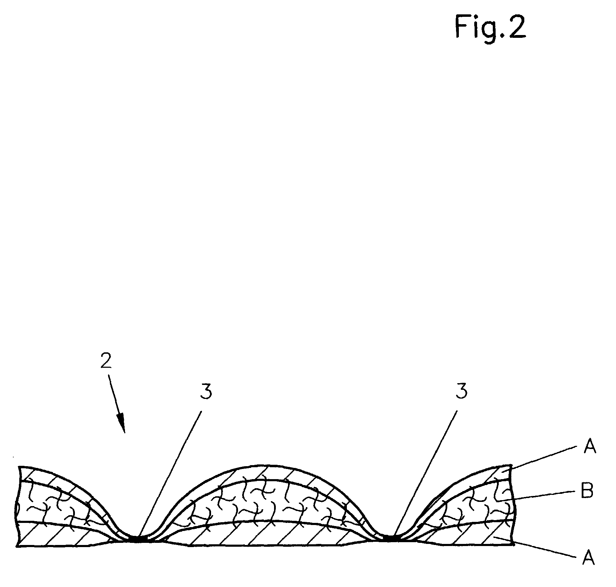

In der Figur 2 ist ein Ausschnitt eines dreischichtigen Reinigungstuches 2 ebenfalls im Schnitt gezeigt. Die drei Vliesstoffschichten A, B, A haben den gleichen Aufbau wie die Schichten A, B, A der Figur 1. Die Schichten sind jedoch punktverschweißt an musterartig vorgegebenen Stellen 3. Dadurch ergibt sich eine höhere Reinigungswirkung des Tuches 2. Das Punktverschweißen wird durch eine Kalandrierung der Vliesschichten erreicht, indem die Vliesschichten gemeinsam durch zwei Walzen hindurchgeführt werden, von denen eine mit musterartig verteilten Noppen versehen ist und die andere eine glatte Oberfläche hat. Daraus resultieren die einseitigen Verschmelzungszonen der Vliesschichten A, B, A an den Stellen 3 des Tuches 2. Durch diese Maßnahme werden die einzelnen Schichten A, B, A fest miteinander verbunden und außerdem die thermoplastischen Fasern der einzelnen Schichten, zumindest an der Tuchoberfläche durch die erhitzten Walzen miteinander verklebt und dadurch die Sekundärstapelfasern miteingeschlossen. Die Vliesschichten A, B, A werden vor ihrer Kalandrierung wasserstrahlvernadelt, um so eine besonders starke Verbindung der Fasern und Schichten untereinander zu erreichen. Außerdem werden die Mikrostapelfasern während der Wasserstrahlbehandlung gesplittet.

## Patentansprüche

1. Reinigungstuch in Vliesstruktur zur Naß-, Feucht- und/oder Trockenreinigung, **dadurch gekennzeichnet**, daß das Reinigungstuch (1, 2) aus Mikrostapelfasern aus mindestens zwei verschiedenen Polymeren und aus saugfähigen, in Spinnverfahren hergestellten Sekundärstapelfasern besteht.

2. Reinigungstuch nach Anspruch 1, dadurch gekennzeichnet, daß die Mikrostapelfasern Mehrkomponenten-Splittfasern, insbesondere Bikomponenten-Splittfasern sind.

3. Reinigungstuch nach Anspruch 1 oder 2, dadurch gekennzeichnet, daß die Bikomponenten-Splittfasern aus Polymeren auf Basis von Polyester und Polyamid gebildet sind.

4. Reinigungstuch nach einem der Ansprüche 1 bis 3, dadurch gekennzeichnet, daß der Titer der Mehrkomponentenfasern vor ihrer Splittung bei 1,7 - 3,0 dtex liegt.

5. Reinigungstuch nach einem der Ansprüche 1 bis 4, dadurch gekennzeichnet, daß der Titer der Splittfasern unter 1 dtex, vorzugsweise unter 0,2 dtex liegt.

6. Reinigungstuch nach einem der Ansprüche 1 bis 4, dadurch gekennzeichnet, daß die Sekundärstapelfasern aus Naturfasern, insbesondere aus Zellulosefasern, aus Baumwolle, aus Viskose, Lyocell und oder aus anderen saugfähigen Stapelfasern, wie beispielsweise Polyvinylalkoholfasern sind.

7. Reinigungstuch nach einem der Ansprüche 1 bis 6, dadurch gekennzeichnet, daß der Titer der Sekundärstapelfasern 1,0 bis 3,0 dtex beträgt.

8. Reinigungstuch nach einem der Ansprüche 1 bis 7, dadurch gekennzeichnet, daß das Reinigungstuch aus mindestens zwei übereinanderliegenden Vliesschichten besteht.

9. Reinigungstuch nach einem der Ansprüche 1 bis 8, dadurch gekennzeichnet, daß die eine Vliesschicht aus polymeren Tertierstapelfasern, insbesondere aus einem Thermoplast und saugfähigen Sekundärstapelfasern und die andere Vliesschicht aus Mikrostapelfasern und saugfähigen Sekundärstapelfasern besteht.

10. Reinigungstuch nach einem der Ansprüche 1 bis 9, dadurch gekennzeichnet, daß die Vliesschicht aus polymeren Tertierstapelfasern und saugfähigen Sekundärstapelfasern eine Mittelschicht bildet, die auf ihren Seiten jeweils von einer Deckvliesschicht aus Mikrostapelfasern und saugfähigen Sekundärstapelfasern eingefaßt ist.

11. Reinigungstuch nach einem der Ansprüche 8 bis 10, dadurch gekennzeichnet, daß die Sekundärstapelfasern durch Vernadelung aus der Tertierstapelfaserschicht in die Mikrostapelfaserschicht eingebracht wurden.

12. Reinigungstuch nach einem der Ansprüche 1 bis 11, dadurch gekennzeichnet, daß die Vliesschichten untereinander durch Vernadeln, Verwirbeln oder Laminieren verbunden sind.

13. Reinigungstuch nach einem der Ansprüche 1 bis 12, dadurch gekennzeichnet, daß die Vliesschichten durch Punktverschweißen miteinander verbunden sind.

14. Reinigungstuch nach einem der Ansprüche 1 bis 13, dadurch gekennzeichnet, daß die einzelnen Vliesschichten durch Verschmelzungszonen unter Anwendung von Wärme und/oder Druck verfestigt sind.

15. Reinigungstuch nach einem der Ansprüche 1 bis 14, dadurch gekennzeichnet, daß die Oberflächen des Reinigungstuches durch Verschmelzungszonen, insbesondere durch Kalandrieren verfestigt sind.

16. Reinigungstuch nach einem der Ansprüche 1 bis 15, dadurch gekennzeichnet, daß das Reinigungstuch ein Flächengewicht von 75 bis 250 g/qm, vorzugsweise von 120 bis 180 g/qm hat.

17. Reinigungstuch nach einem der Ansprüche 1 bis 16, dadurch gekennzeichnet, daß bei einem dreilagigen Reinigungstuch aus einer Mittelschicht aus Tertierstapelfasern und Sekundärstapelfasern und zwei Deckschichten aus Mikrostapelfasern und Sekundärstapelfasern das Flächengewicht der Mittelschicht 40 bis 80 % des Gesamtflächengewichts beträgt.

18. Reinigungstuch nach einem der Ansprüche 1 bis 17, dadurch gekennzeichnet, daß die Flächengewichte der Deckschichten gleich sind.

19. Reinigungstuch nach einem der Ansprüche 1 bis 18, dadurch gekennzeichnet, daß der Anteil an Mikrostapelfasern den Anteil an Sekundärstapelfasern in der beziehungsweise den Deckschichten überwiegt.

20. Reinigungstuch nach einem der Ansprüche 1 bis 19, dadurch gekennzeichnet, daß der Anteil an Mikrostapelfasern in der beziehungsweise den Deckschichten 70 bis 98 %, vorzugsweise 70 bis 80 % beträgt.

21. Reinigungstuch nach einem der Ansprüche 1 bis 20, dadurch gekennzeichnet, daß der Anteil an Sekundärstapelfasern den Anteil an Tertierstapelfasern in der Mittelschicht überwiegt.

22. Reinigungstuch nach einem der Ansprüche 1 bis 21, dadurch gekennzeichnet, daß der Anteil an Sekundärstapelfasern in der Mittelschicht 70 bis 100 %, vorzugsweise 70 bis 80 % beträgt.
